# EUROPEAN PATENT APPLICATION

(11) **EP 1 293 904 A1**
(43) Date of publication of application: **19.03.2003**
(21) Application number: 01410115.8
(22) Date of filing: 14.09.2001
(51) Int. Cl.: G06F 11/14, G06F 9/445

(54) **Method of initiating a backup procedure**

(71) Applicant: Hewlett-Packard Company, Palo Alto, CA 94304 (US)
(72) Inventor: Owhadi, Eric, 38360 Sassenage (FR)
(74) Representative: Lloyd, Richard Graham

(57) **Abstract**

A method of initiating a backup procedure comprising the steps of; detecting a shutdown instruction, and on detection of the shutdown instruction, initiating a backup procedure.

## Description

### Field of Invention

This invention relates to a method of initiating a backup procedure, and a module operable to perform the method.

### Background of the Invention

To guard against failure of a computer or damage to or corruption of its files or data, it is well known to perform a backup procedure. In such a procedure, a record is made of the files which it is required to preserve in the event of failure. The backup procedure is performed by an appropriate program, such as Rembo Auto Backup (™) in which an image of the contents of a hard disc drive of the computer is stored, either in a separate partition on that hard drive or on a separate storage medium. When an operating system of the computer is running, files on the hard disk drive will be in use, locked or being modified, and so to scan a full, correct image it is desirable that backup is performed when the operating system is not running. Conventionally, such backup procedures are initiated as part of the boot procedure of the computer, such that an image is stored before the operating system boot occurs. Whether a backup procedure is implemented during a boot procedure, there is necessarily a delay while the backup procedure is performed.

An aim of the invention is to reduce or overcome the above problem.

### Summary of the Invention

According to a first aspect of the present invention, we provide a method of implementing a backup procedure comprising the steps of detecting a shutdown instruction, and on detection of the shutdown instruction, initiating a backup procedure.

In this specification, "shutdown instruction" is intended to refer to any signal or instruction generated by the operating system or otherwise which causes the computer to undergo a transition from an operating state to a lower power consumption or lower active state.

The method may comprise the step, on completion of the backup procedure, of initiating a shutdown procedure.

The step of detecting the shutdown instruction may comprise the step of detecting shutdown information and storing the shutdown information.

The step of initiating the shutdown procedure may comprise the step of reading the stored shutdown information and initiating the shutdown procedure accordingly.

The step of initiating the backup procedure may comprise the step of reading scheduling information and only performing a backup procedure if required by the scheduling information.

The step of initiating the backup procedure may comprise the step of calling a backup program.

The step of initiating the backup procedure may comprise initiating a boot procedure such that a backup program is called as part of the boot procedure.

The step of initiating the backup procedure may comprise the step of storing a shutdown instruction readable by the backup program, such that the backup program initiates a shutdown procedure on completion of the backup procedure.

According to a second aspect of the invention, we provide a module operable to perform a method according to the first aspect of the invention.

The module may comprise a BIOS module, which may be included within a personal computer, for instance.

### Brief Summary of the Drawings

The invention will now be described by way of example only with reference to the accompanying drawings wherein:
Figure 1 is a flow chart illustrating a first embodiment of the present invention,
Figure 2 is a further flow chart illustrating another embodiment of the invention,
Figure 3 is a fourth flow chart illustrating a third embodiment of the invention,
Figure 4 is a diagram showing sleeping states of a computer as defined by the ACPI specification, and
Figure 5 is a diagram illustrating the step of detecting a shutdown structure in a method embodying the present invention.

### Description of the Preferred Embodiments

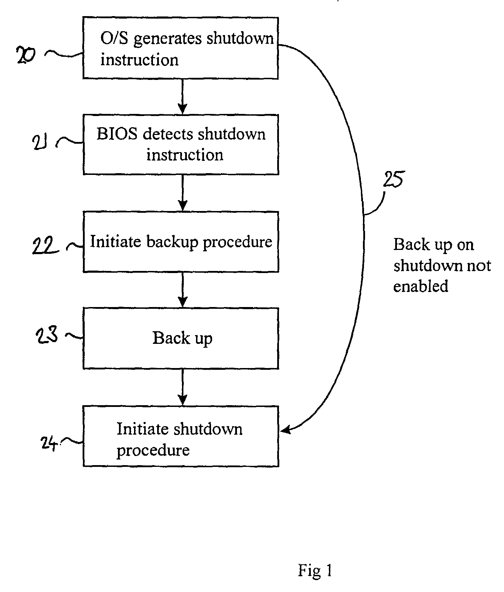

Referring now to Figure 1, a method embodying the present invention is generally illustrated. At step 20, in this example the operating system generates a shutdown instruction. In this specification, "shutdown instruction" is intended to refer to any signal or instruction generated by the operating system or otherwise which causes the computer to undergo a transition from an operating state to a lower power consumption or lower activity state.

The shutdown instruction is usually generated by the operating system once the operating system has, for example, shut down any devices, closed any operating programs and where necessary saved files, RAM contents or any other system context information to a non-volatile memory or to disk, depending on the shutdown state required. Conventionally, the generation of the shutdown instruction causes the computer to then power down to the required extent.

At step 21, the shutdown instruction is detected, in the present example by a BIOS of the computer. The shutdown procedure is not initiated; instead, at step 22 the backup procedure is initiated, for example by calling a backup program to perform the required backup. The backup procedure is performed at step 23, and at step 24, the shutdown procedure is initiated on completion of the backup procedure. The shutdown procedure may be initiated by the backup program, or alternatively control may be returned to the BIOS by the backup program which may then initiate the shutdown procedure. It is desirable that the backup parameters be controllable by a user. Thus, the backup on shutdown method may be disabled, such that the shutdown instruction generated by the operating system initiates the shutdown procedure at step 24 in conventional manner, as shown by arrow 25.

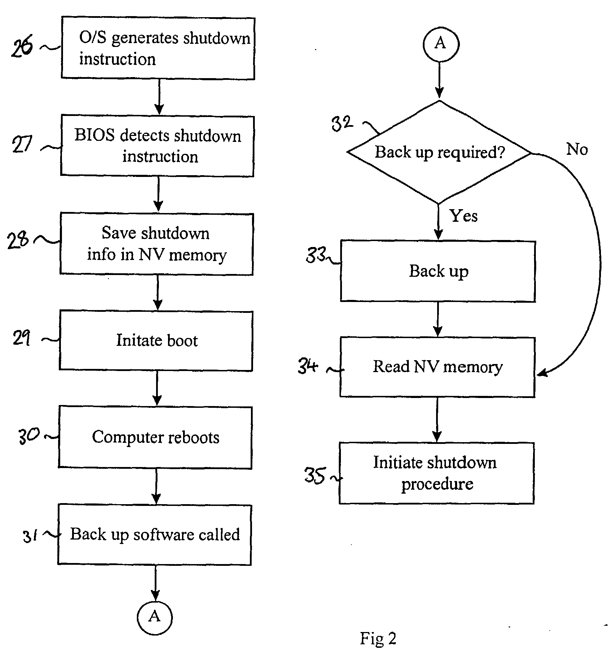

Where the backup program is of the type which is invoked during the boot process, the BIOS may initiate backup indirectly by causing the computer to reboot. With reference to Figure 2, at step 26 the operating system generates a shutdown request as in Figure 1, and at step 27 the BIOS detects the shutdown instruction. In this example, at step 28 the BIOS stores shutdown information relating to the shutdown instruction in a non-volatile storage medium, for example in non-volatile ram (NVRAM) such as a CMOS or serial EPROM. At step 29 the BIOS initiates a boot procedure, such that at step 30 reboot of the computer occurs, and at step 31 the backup software is initiated and checks any scheduling instructions at step 32. If backup is required, then at step 33 the backup is performed. On completion of the backup, or if backup is not required immediately after step 32, at step 34 the stored shutdown information is read from the non-volatile storage medium, and at step 35 the shutdown procedure initiated in accordance with the stored shutdown information. As in the embodiment of Figure 1, the backup program may return control to the BIOS, which may read the stored shutdown information and initiate the shutdown procedure, or the backup program itself may read the stored shutdown information and initiate the shutdown procedure accordingly.

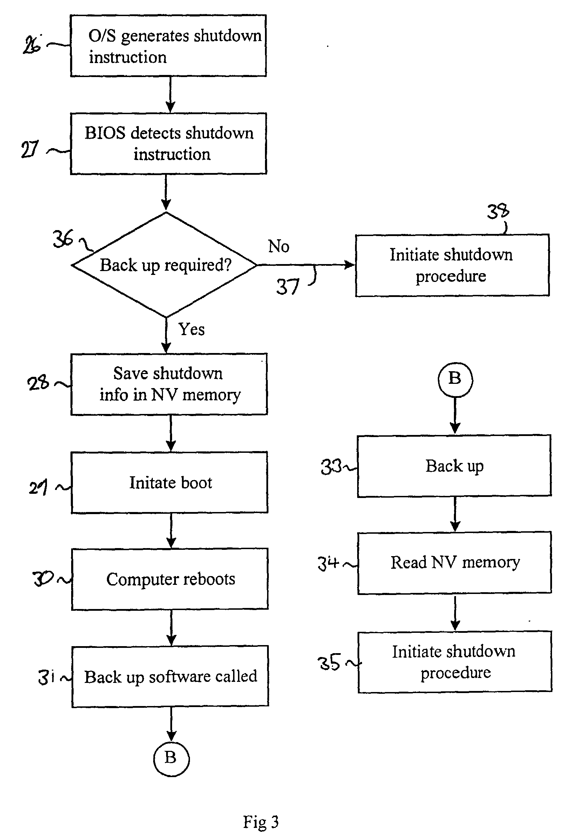

A disadvantage of the embodiment of Figure 2 is that the computer will be rebooted at every shutdown instruction, whether or not backup is required. This is overcome by the embodiment of Figure 3 where the scheduling information is checked by the BIOS. In Figure 3, those steps which correspond to the steps of Figure 2 and indicated with the same reference number. As before, at step 28 the operating system generates a shutdown instruction which at step 27 is detected by the BIOS. At step 36 however, the BIOS checks to see whether backup is required, in accordance with scheduling instructions. If not, then as shown by arrow 37, the BIOS initiates the shutdown procedure in accordance with the detected shutdown instruction at step 38. Otherwise, at step 28 the BIOS stores shutdown information associated with the shutdown instructions in a non-volatile storage medium and at step 29 initiates the reboot procedure, causing the computer to reboot at step 30. At step 31, the backup program is called, and at step 33 the backup is performed. At step 34 the information stored in the non-volatile storage medium is read, and at step 35 the shutdown procedure is initiated in accordance with the shutdown instructions. As in the previous embodiments, the backup software may pass control back to the BIOS on completion of the backup at step 33 and steps 34 and 35 may be performed by the BIOS, or alternatively the backup software itself may be responsible for reading the non-volatile storage medium at step 34 and invoking the shutdown procedure at step 35.

It will be apparent of course that a scheduling instruction check similar to step 32 of Figure 2 of step 36 of Figure 3 may be included in the embodiment of Figure 1 if required.

With reference to step 21, it will be apparent that the detection of the shutdown instruction by the BIOS may be performed in any appropriate way as desired and as appropriate to the hardware and software configuration of the user's computer. Where the shutdown instruction is sent directly to the BIOS, for example in accordance with the Advanced Power Management (APM) specification, it will be relatively straight forward for the BIOS to initiate a backup procedure before initiating the shutdown procedure in the usual manner.

In the example of a computer provided with an operating system power management (OSPM) capacity in accordance with the advanced configuration and power interface (ACPI) specification, the operating system of the computer is able to cause transitions between a working state and a selected sleeping state. Figure 1 shows the relationship between the working state, the sleeping states and the 'soft off, state as set at in the ACPI specification, in which the working state S0 is shown at 10, the S5 soft off state is shown at 11 and a plurality of sleeping states S1 to S4 are shown at 12, 13, 14, 15 respectively. The transitions between the S0 state 10, S5 state 11 and sleeping states S1 to S4 are shown by arrows 11a, 12a, 13a, 14a, 15a. To cause one of the transitions to occur, the OSPM must write to a predefined register, in the present example the SLP_EN register, and it is this step of writing to the predefined register that provides a detectable shutdown instruction.

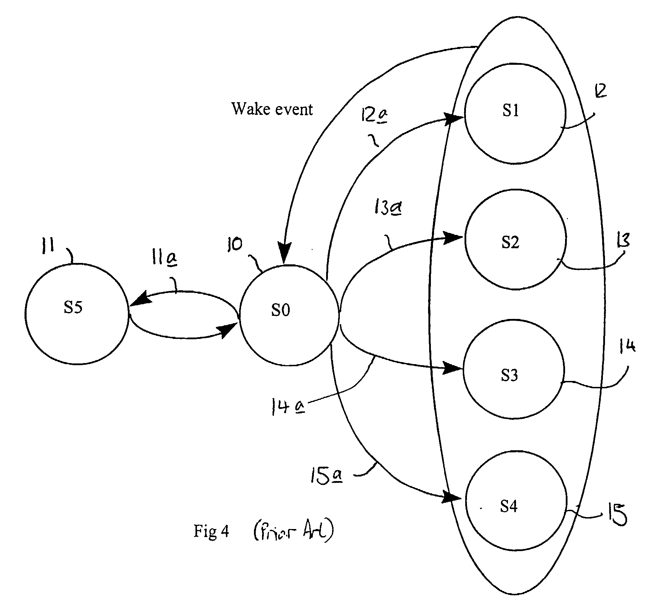

Where the computer is operable in accordance with the ACPI specification, the shutdown instruction may be detected as follows. As illustrated with reference to Figure 4, in the ACPI specification a plurality of sleep states, labelled as S1 to S5, are identified. The states S1 to S5 have progressively lower power requirements, where those states with the lowest power requirements have longer latency times, i.e. the time required to wake up the computer to an operating state, and involve a greater loss of system context. In the present example, the backup procedure is preferably only invoked when the operating system issues instructions to shutdown to either state S4, otherwise referred to as "hibernation" or state S5 which is strictly not a sleeping state and requires a complete boot to return to the S0 state. It will be apparent that in general, the operating system will only generate instructions to shut down to an S4 or S5 state at the end of a session, when the computer will no longer be required by the user, and so represents an appropriate time at which to perform a backup.

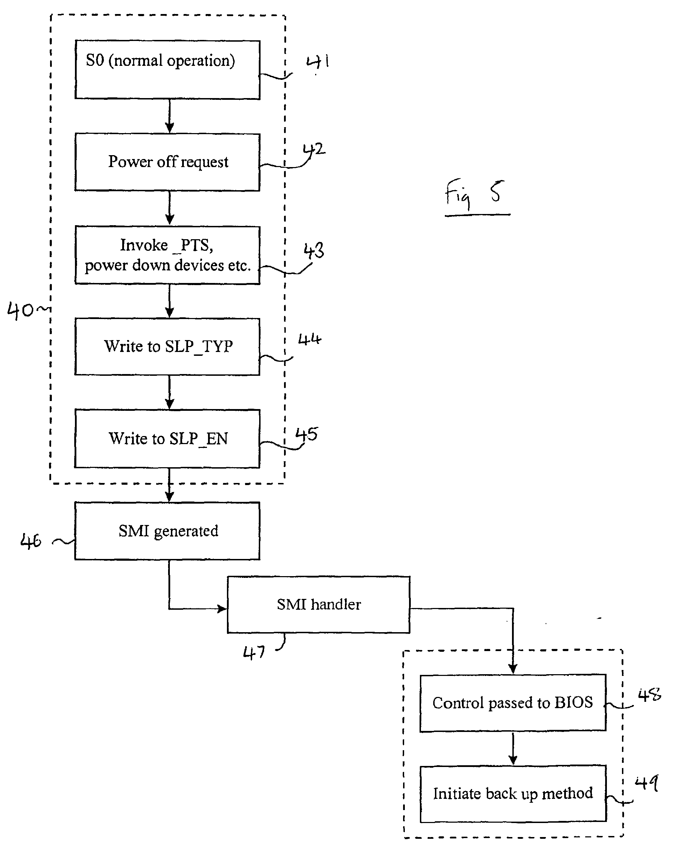

Referring now to Figure 5, the ACPI shutdown procedure is generally indicated at 40. At step 41, the computer is in state S0, the normal operating mode. At step 42 a power off request is received. At step 43, the operating system performs whatever steps are required, for example where necessary powering devices, unloading drivers, copying the system context to and invoking _PTS, the "prepare to sleep" instructions. At step 44, shutdown information comprising the required sleep state is written to the SLP_TYP register, in the present example as a three-bit number corresponding the number of the required sleep state. When shutdown is finally required, at step 45 the operating system then writes to the appropriate bit of the SLP_EN register to cause the shutdown. In conventional manner, this leads to the power being physically shut off.

Conventionally, the location of the SLP_EN register is stored in a table set by the BIOS, which can then be read by the operating system as required. In the present example however, the SLP_EN register is mapped to another location, and this location is recorded in the table. When the operating system writes to the re-mapped location, a system management interrupt (SMI) is generated at step 46, as a result of which control is passed back by a SMI handler 47 to the BIOS at step 48. At step 49, a backup initiation method as discussed herein, for example as described with reference to any of the embodiments of Figures 1 to 3, is performed. At the completion of the backup procedure, the step of initiating the shutdown procedure may be performed by writing to the correct location of the SLP_EN register.

It will be apparent that the method according to the present invention may be performed by a module or program provided in hardware or software or a combination of both. Although as discussed herein it is preferable that the steps of detecting the shutdown instruction and initiating backup procedure are performed by the BIOS, it will be apparent that the present invention may be implemented otherwise as desired. Although in the present example the shutdown information is generated by an operating system, it will be apparent that the instruction may be generated by any other means as appropriate.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of initiating a backup procedure comprising the steps of;
detecting a shutdown instruction,
and on detection of the shutdown instruction, initiating a backup procedure.

2. A method according to claim 1 comprising the step, on completion of the backup procedure, of initiating a shutdown procedure.

3. A method according to claim 1 or claim 2 wherein the step of detecting the shutdown instruction comprises the step of detecting shutdown information and storing the shutdown information.

4. A method according to claim 3 where dependant on claim 2 wherein the step of initiating the shutdown procedure comprises the step of reading the stored shutdown information and initiating the shutdown procedure accordingly.

5. A method according to any one of the preceding claims wherein the step of initiating the backup procedure comprises the step of reading scheduling information and only performing a backup procedure if required by the scheduling information.

6. A method according to any one of the preceding claims wherein the step of initiating the backup procedure comprises the step of calling a backup program.

7. A method according to any one of claims 1 to 5 wherein the step of initiating the backup procedure comprises initiating a boot procedure such that a backup program is called as part of the boot procedure.

8. A method according to claim 6 or claim 7 wherein the step of initiating the backup procedure comprises the step of storing shutdown information readable by the backup program, such that the backup program initiates a shutdown procedure on completion of the backup procedure.

9. A module operable to perform a method of any one of claims 1 to 8.

10. A module according to claim 9 comprising a BIOS module.

11. A computer arranged to operate according to a method as claimed in any of claims 1 to 8.
